(19) **Europäisches Patentamt / European Patent Office / Office européen des brevets**

(11) **EP 2 894 466 B1**

(12) **EUROPEAN PATENT SPECIFICATION**

(45) Date of publication and mention of the grant of the patent:
**11.12.2019 Bulletin 2019/50**

(51) Int Cl.:
*F24D 3/00* *(2006.01)*   *G01N 27/02* *(2006.01)*
*G01N 17/02* *(2006.01)*

(21) Application number: **13835056.6**

(22) Date of filing: **09.09.2013**

(86) International application number:
**PCT/JP2013/074197**

(87) International publication number:
**WO 2014/038687 (13.03.2014 Gazette 2014/11)**

(54) **ANTICORROSIVE PERFORMANCE DETERIORATION DETECTION SENSOR, AND HOT-WATER SUPPLY AND HEATING SYSTEM PROVIDED WITH SAME**

SENSOR ZUR ERKENNUNG DER VERSCHLECHTERUNG EINER ANTIKORROSIONSLEISTUNG SOWIE HEISSWASSERZUFUHR- UND ERHITZUNGSSYSTEM DAMIT

CAPTEUR DE DÉTECTION DE DÉTÉRIORATION DE PERFORMANCE ANTICORROSIVE ET SYSTÈME D'ALIMENTATION EN EAU CHAUDE ET DE CHAUFFAGE ÉQUIPÉ DE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2012 JP 2012198658**

(43) Date of publication of application:
**15.07.2015 Bulletin 2015/29**

(73) Proprietor: **Mitsubishi Electric Corporation Tokyo 100-8310 (JP)**

(72) Inventors:
- **MORIMURA, Hideyuki**
  **Tokyo 100-8310 (JP)**
- **KURIKI, Hironori**
  **Tokyo 100-8310 (JP)**
- **MIYA, Kazuhiro**
  **Tokyo 100-8310 (JP)**
- **FURUKAWA, Seiji**
  **Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
| | |
|---|---|
| WO-A1-2013/065207 | JP-A- H0 249 150 |
| JP-A- H04 172 241 | JP-A- H09 268 386 |
| JP-A- S63 153 460 | JP-A- 2003 083 924 |
| JP-A- 2007 101 184 | JP-A- 2010 266 342 |
| JP-A- 2012 220 288 | JP-B2- 2 532 038 |
| JP-U- S58 165 649 | JP-U- S58 165 649 |
| US-A- 3 210 655 | |

- **A. AMIRUDIN ET AL: "Application of electrochemical impedance spectroscopy to study the degradation of polymer-coated metals", PROGRESS IN ORGANIC COATINGS, vol. 26, no. 1, 1 August 1995 (1995-08-01), pages 1-28, XP055255035, NL ISSN: 0300-9440, DOI: 10.1016/0300-9440(95)00581-1**
- **KOJI HONMA: 'The coated steel plate degradation evaluation sensors applying the alternating current impedance method' RUST PREVENTION AND CONTROL vol. 35, no. 1, 01 January 1991, pages 14 - 19, XP008176799**

## Description

### Technical Field

The present invention relates to a corrosion resistance degradation sensor that detects degradation of an anticorrosive coating which is formed on a metal material and serves to reduce corrosion of the metal material when the metal material is used in a moisture-containing atmosphere and, more particularly, to a corrosion resistance degradation sensor that detects degradation of an anticorrosive coating which is formed on the inner surface of a pipe made of a metal material and serves to reduce corrosion of the metal material in a system through which a coolant circulates, for example, a hot water supply and heating system or an air-conditioning system including a heat exchanger.

### Background Art

A conventionally proposed facility system, such as a hot water supply and heating system or an air-conditioning system, includes, for example, a pipe which is made of a metal material and has its inner surface covered with an anticorrosive coating to suppress corrosion of the metal material.

Aging degradation of the anticorrosive coating, however, lowers the corrosion resistance of the inner surface of the pipe, resulting in the progress of corrosion of such a metal material. The progress of corrosion causes the metal material to suffer pitting corrosion leading to formation of a through-hole. Unfortunately, this results in leakage of a coolant, thus significantly reducing the heat exchange performance.

To prevent a reduction in heat exchange performance caused by coolant leakage in such a facility system, degradation of the anticorrosive coating has to be detected before corrosion of a metal material for a pipe or the like included in the system, and a proper process of, for example, re-forming the anticorrosive coating has to be performed.

Hence, a method has been proposed to detect damages to a coating formed on the inner surface of a pipe. According to this method, electrical characteristics are measured for at least two terminal pairs of three terminal pairs as sets of three terminals connected to two electrodes arranged in a pipe line defined by a pipe having its inner surface covered with an anticorrosive coating, and a pipe body, and damage or non-damage to the anticorrosive coating and the position of damage to the anticorrosive coating are detected based on the determined electrical characteristics (refer to, for example, Patent Literature 1).

Another method has been proposed to evaluate the state of corrosion of a pipe. According to this method, a target circuit for measurement and a simulated circuit that includes a resistor having a variable resistance are arranged, and an impedance is determined based on the correlation among the applied set voltage, the current flowing through the simulated circuit, and the resistance of the resistor, thus reducing the influence of the external environment, such as an ambient electromagnetic wave or an ambient temperature (refer to, for example, Patent Literature 2).

Patent Literature 3 is considered to be the relevant prior art and discloses a method and apparatus for detecting and locating breakers or imperfections in a relatively nonconducting or insulating coating material applied to the surface of a conducting material.

### List of Citations

### Patent Literature

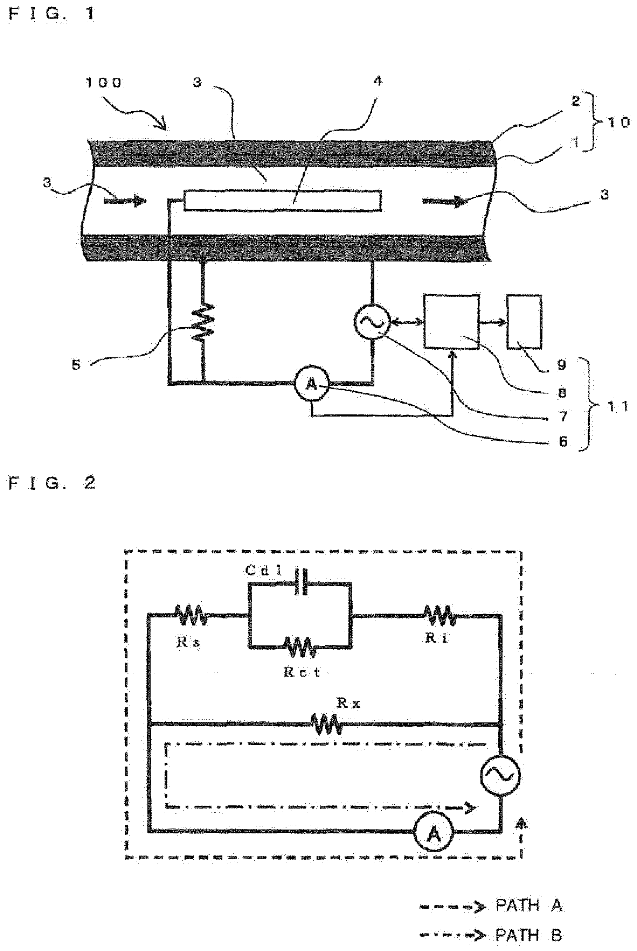

Patent Literature 1: Japanese Patent No. 2 532 038 (claim 1, the right column of p. 4 to the left column of p. 5 in the specification, and FIG. 2)

Patent Literature 2: Japanese Unexamined Patent Application Publication JP 2005-315 864 A (paragraphs [0050] to [0054])

Patent Literature 3: US 3 210 655 A

### Summary of the Invention

### Technical Problem

With a technique disclosed in Patent Literature 1, electrical characteristics are measured using a current detected by applying a voltage to at least two terminal pairs of the three terminal pairs each formed by a set of three terminals connected to the two electrodes arranged in the pipe line defined by the pipe, and the pipe body. Damage to the coating is detected based on the electrical characteristics.

This method requires measurement for the terminal pairs each including the coating disposed between the terminals. The coating with no damage has a very high resistance, and the detected current is accordingly very small. This disadvantageously makes it difficult to measure the electrical characteristics of the terminal pair including the coating disposed between the terminals.

Applying a high voltage increases the detected current, thereby enabling measurement. Unfortunately, it is highly possible that such high voltage application may result in damage to the coating and the progress of corrosion of the coating. It is therefore difficult to detect damage to the coating, free from the influence of measurement on the coating to be measured.

In the technique disclosed in Patent Literature 1, a pipe line liquid flowing through the pipe line is included in the gap between the terminals, for any of the three terminal pairs each formed by a set of three terminals. The pipe line liquid in a facility system, such as a hot water supply and heating system or an air-conditioning system, contains antifreeze or salt serving as a corrosion inhibitor or the like. The pipe line liquid has a resistance that depends on temperature.

Accordingly, the resistance, the resistance ratio, or the potential difference is significantly affected by a change in ambient temperature. A large change in ambient temperature may influence the ambient temperature to a degree larger than changes in electrical characteristics, serving as references for coating damage detection, of the three terminal pairs. It may be difficult to accurately detect damage to the coating.

A technique disclosed in Patent Literature 2 is a method of evaluating the state of corrosion of a pipe while reducing the influence of the external environment on impedance measurement. Upon impedance measurement, impedances are obtained based on currents detected when an alternating-current (AC) voltage is applied to the target circuit, so that a change in surface state of an electrode caused by corrosion or the like can be determined based on the impedances.

The target circuit, which is used to, for example, detect degradation of the anticorrosive coating on the inner surface of a pipe, includes the interface between the electrode and a solution, and the impedance includes a resistance component and an electric double layer capacitance component formed at the interface between the electrode and the solution.

According to the technique disclosed in Patent Literature 2, the target circuit and the simulated circuit including the resistor having a variable resistance are arranged, and an impedance is determined based on the correlation among the applied set voltage, the current flowing through the simulated circuit, and the resistance of the resistor. The influence of the external environment on the resistance component of the impedance in the environment, where the target circuit is placed, can be reduced based on the above-mentioned correlation obtained using the simulated circuit including the resistor.

The simulated circuit, however, takes no account of the capacitance component which significantly affects the impedance at the interface between the electrode and the solution included in the target circuit for detecting degradation of the anticorrosive coating on the inner surface of the pipe. The capacitance component of the impedance is affected by the external environment. Disadvantageously, it is difficult to measure an accurate impedance.

A complex circuit that precisely simulates the target circuit is necessary to reduce the influence of the external environment on components other than the resistance component, for example, the capacitance component of the impedance. Such a simulated circuit has to be mounted separately from the target circuit. It is therefore necessary to manufacture the simulated circuit and take into account a space for the simulated circuit.

The present invention has been made to solve the above-described problems, and has as its object to provide a corrosion resistance degradation sensor that, while preventing damage to an anticorrosive coating formed on the inner surface of a conductive pipe, and the progress of corrosion of the anticorrosive coating due to factors associated with measurement for detecting degradation of the anticorrosive coating, accurately removes the influence of the external environment, and precisely detects degradation of the anticorrosive coating.

Solution to the Problem

The present invention provides a corrosion resistance degradation sensor according to independent claim 1.

Advantageous Effects of the Invention

A corrosion resistance degradation sensor according to the present invention includes a conductive pipe having its inner surface covered with an anticorrosive coating, an electrode insulated from the conductive pipe and placed in contact with a liquid within the conductive pipe, a resistor having its one end connected to the outer surface of the conductive pipe, an AC power supply having its one terminal connected to the conductive pipe and its other terminal connected to the electrode and the resistor, and a detecting unit that detects degradation or non-degradation of the anticorrosive coating based on the frequency dependence of impedance response to the AC voltage of the AC power supply.

The sensor can, while preventing damage to the anticorrosive coating and the progress of corrosion of the anticorrosive coating due to factors associated with measurement, remove the influence of the external environment, and properly detect the state of degradation of the anticorrosive coating.

Brief Description of the Drawings

FIG. 1     is a diagram illustrating a corrosion resistance degradation sensor according to Embodiment 1 of the present invention.

FIG. 2     is a diagram illustrating an electrical equivalent circuit of the corrosion resistance degradation sensor according to Embodiment 1 of the present invention.

FIG. 3     is a diagram illustrating an exemplary position of an electrode 4 in the corrosion resistance degradation sensor according to Embodiment 1 of the present invention.

FIG. 4     is a diagram illustrating a typical electrical equivalent circuit with a simulated electrode reaction at the interface between the electrode 4 and a solution.

FIG. 5     is a graph illustrating the frequency dependence of impedance to an applied AC voltage in an electric circuit including the electrode 4 and the solution.

FIG. 6     is a graph illustrating the frequency dependence of impedance to an applied AC voltage in an electric circuit including only a resistor 5.

FIG. 7     is a graph illustrating the influences of changes in temperature of the solution on the frequency dependence of impedance in the electric circuit including the electrode 4 and the solution.

FIG. 8     is a graph illustrating the influences of changes in solution composition on the frequency dependence of impedance in the electric circuit including the electrode 4 and the solution.

FIG. 9     is a graph illustrating the frequency dependences of impedance to an applied AC voltage in the corrosion resistance degradation sensor according to Embodiment 1 of the present invention.

FIG. 10    is a schematic diagram illustrating an exemplary configuration of a hot water supply and heating system including a corrosion resistance degradation sensor according to Embodiment 2 of the present invention.

FIG. 11    is a schematic diagram illustrating an exemplary configuration of a hot water supply and heating system including a corrosion resistance degradation sensor 100 connected by bypassing.

Description of Embodiments

Embodiments of the present invention will now be described with reference to the accompanying drawings.

Embodiment 1

FIG. 1 is a schematic diagram illustrating an exemplary configuration of a corrosion resistance degradation sensor 100 according to Embodiment 1 of the present invention. The corrosion resistance degradation sensor 100 is attached to a conductive pipe 2 included in a facility system, such as a hot water supply and heating system or an air-conditioning system including a heat exchanger. The corrosion resistance degradation sensor 100 detects degradation of an anticorrosive coating 1 covering the inner surface of the pipe.

Configuration of Corrosion Resistance Degradation Sensor 100

As illustrated in FIG. 1, the corrosion resistance degradation sensor 100 includes the conductive pipe 2 having its inner surface covered with the anticorrosive coating 1, an electrode 4 which is placed in a pipe line defined by the conductive pipe 2, in contact with a pipe line liquid 3 flowing through the pipe line, and kept insulated from the conductive pipe 2, a resistor 5 having its one end connected to the outer surface of the conductive pipe 2, an AC power supply 7 having its one terminal connected to a terminal leading from the conductive pipe 2 and its other terminal connected through an ammeter 6 to a terminal leading from the electrode 4 and the resistor 5, an impedance meter 8, and an corrosion resistance degradation determining unit 9.

The conductive pipe 2 having its inner surface covered with the anticorrosive coating 1 forms a corrosion-resistant inner-surface pipe 10. The ammeter 6, the AC power supply 7, the impedance meter 8, and the corrosion resistance degradation determining unit 9 constitute an impedance analysis device 11. A module consisting of the impedance meter 8 and the corrosion resistance degradation determining unit 9 corresponds to a detecting unit in the present invention.

FIG. 2 is a diagram illustrating an electrical equivalent circuit of the corrosion resistance degradation sensor 100 according to Embodiment 1 of the present invention. The circuit includes an electric double layer capacitance Cdl formed between the pipe line liquid 3 and both the anticorrosive coating 1 and the conductive pipe 2, a solution resistance Rs of the pipe line liquid 3, a charge transfer resistance Rct in a path formed by the conductive pipe 2 uncovered with the anticorrosive coating 1, the pipe line liquid 3, and the electrode 4, a resistance Ri of the anticorrosive coating 1, and a resistance Rx of the resistor 5.

As illustrated in FIGS. 1 and 2, the electric circuit for detecting degradation of the anticorrosive coating 1 in the corrosion resistance degradation sensor 100 includes a path A (dashed line) including the conductive pipe 2, the anticorrosive coating 1, the pipe line liquid 3, and the electrode 4, and a path B (alternate long and short dashed line) including the conductive pipe 2 and the resistor 5. The paths A and B are connected in parallel with each other.

The anticorrosive coating 1 that blocks current conduction between the conductive pipe 2 and the pipe line liquid 3 is disposed to prevent corrosion of the inner surface of the conductive pipe 2.

The conductive pipe 2 is made of, for example, copper or stainless steel and generally defines a pipe line through which a coolant or the like circulates in a facility system, such as a hot water supply and heating system.

The conductive pipe 2 is not limited to a linear pipe as illustrated in FIG. 1, and can have an arbitrary shape such as an L or T shape as long as the pipe line liquid 3 typically used in a facility system, such as a hot water supply and heating system, can be circulated through the conductive pipe 2.

The pipe line liquid 3 is, for example, a coolant or refrigerant flowing through the pipe line defined by the conductive pipe 2. The pipe line liquid 3 can be used upon being added with antifreeze or salt serving as a corrosion inhibitor or the like, depending on its purpose of use.

The electrode 4 is used to supply a current to the path A. The electrode 4 has its one end connected through the ammeter 6 to the AC power supply 7 by a lead wire extending through the conductive pipe 2. The lead wire can be coated with an insulating resin or the like to maintain insulation between the electrode 4 and the conductive pipe 2.

The electrode 4 is in contact with the pipe line liquid 3, and made of a metal that exhibits high electrochemical stability and is resistant to corrosion even when a current flows through it. More specifically, the electrode 4 is preferably made of an electrochemically noble metal, such as gold, platinum, titanium, copper, or stainless steel.

The position of the electrode 4 is not limited to the center of the pipe line defined by the conductive pipe 2 as illustrated in FIG. 1. The electrode 4 can be disposed at an arbitrary position as long as it is kept insulated from the conductive pipe 2 and is in contact with the pipe line liquid 3. To accurately detect degradation of the anticorrosive coating 1 on the entire conductive pipe included in the facility system, such as a hot water supply and heating system, the electrode 4 is preferably disposed at a position where the anticorrosive coating 1 is likely to degrade in the entire conductive pipe.

More specifically, it is preferable to dispose the electrode 4 at a position where the anticorrosive coating 1 is likely to be physically damaged by the flow of the pipe line liquid 3 (for example, a position where the flow rate of the pipe line liquid 3 is high or a position where the flow of the pipe line liquid 3 is turbulent), or a position where the properties of the pipe line liquid 3 are more likely to change (for example, a position where the flow rate of the pipe line liquid 3 is low or a position where the pipe line liquid 3 stagnates).

Since the electrode 4 is disposed within the pipe line defined by the conductive pipe 2, the electrode 4 is preferably placed so as not to disturb the flow of the pipe line liquid 3. If the conductive pipe 2 has a linear shape, the electrode 4 can be placed so as to coincide with the central axis of the conductive pipe 2. If the conductive pipe 2 is T-shaped, the electrode 4 can be placed within the pipe line such that the electrode 4 is in contact with the pipe line liquid 3 without disturbing the flow of the pipe line liquid 3.

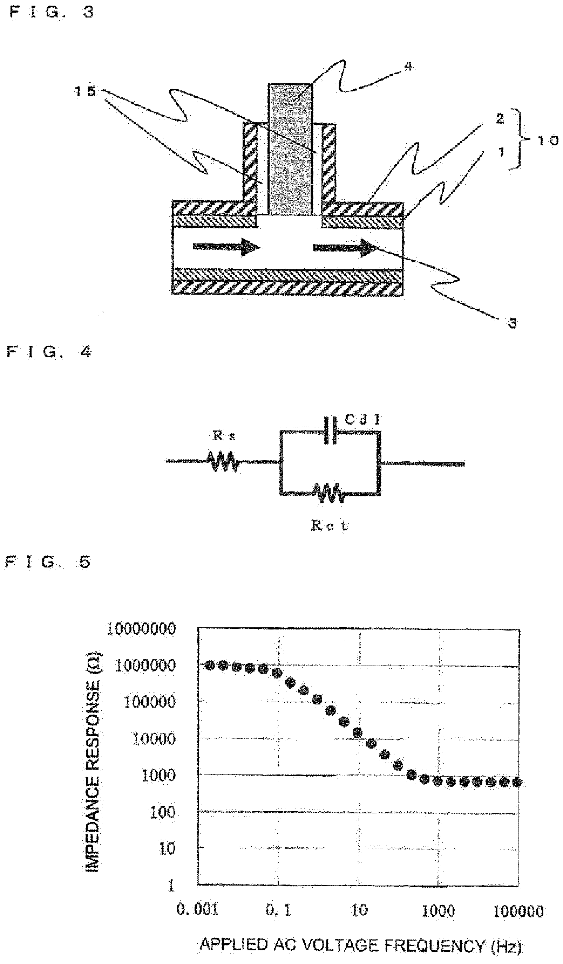

FIG. 3 is a diagram illustrating an exemplary position of the electrode 4 in the corrosion resistance degradation sensor 100 according to Embodiment 1 of the present invention. The T-shaped conductive pipe 2 includes three openings and a linear portion connecting two of these openings together, and the pipe line liquid 3 circulates through the linear portion. In this arrangement, the cylindrical electrode 4 can be placed in the remaining one opening, perpendicular to the two openings connected together, while being insulated from the conductive pipe 2 by an insulating seal 15 so as not to disturb the flow of the pipe line liquid 3.

The insulating seal 15, which is disposed between the conductive pipe 2 and the electrode 4, blocks conduction of a current to flow between them, and closes a gap formed between them to prevent leakage of the pipe line liquid 3. The insulating seal 15 is made of, for example, an insulating resin.

The electrode 4 can have any shape, for example, a cylindrical, prismatic, or spherical shape. The electrode 4, which may disturb the flow of the pipe line liquid 3, preferably has a shape that does not disturb the flow of the pipe line liquid 3. More specifically, if the conductive pipe 2 has a linear shape, the electrode 4 preferably has a highly symmetric cross-section perpendicular to the direction in which the pipe line liquid 3 flows, and typically has a cylindrical or prismatic shape having regular polygonal faces.

The electrode 4 preferably has a sufficiently large area of contact with the pipe line liquid 3. If the anticorrosive coating 1 degrades, the current flows through the pipe line liquid 3 to the electrode 4 in the path A shown in FIG. 2. Accordingly, the electrode 4 preferably has a sufficiently large area of contact with the pipe line liquid 3 so that the current which flows from the pipe line liquid 3 upon degradation of the anticorrosive coating 1 is detected with high sensitivity. If the conductive pipe 2 has a diameter of approximately 20 mm, the area of contact between the electrode 4 and the pipe line liquid 3 is preferably 1 cm$^2$ or more.

The resistor 5 is used to control a path through which the current flows in the parallel circuit including the paths A and B shown in FIG. 2. More specifically, the resistor 5 has a resistance greater than a predetermined resistance measured in the path A with no anticorrosive coating 1, that is, the path A including the conductive pipe 2 uncovered with the anticorrosive coating 1, the pipe line liquid 3, and the electrode 4.

Furthermore, the resistance of the resistor 5 is less than that of the anticorrosive coating 1.

The resistance in the path A with no anticorrosive coating 1, that is, the path A including the conductive pipe 2 uncovered with the anticorrosive coating 1, the pipe line liquid 3, and the electrode 4 is approximately $10^6$ $\Omega$ when typical tap water having an electric conductivity of approximately 100 to 200 $\mu$S/cm is used. The anticorrosive coating 1 has a resistance of $10^9$ $\Omega$ or higher. Accordingly, the resistor 5 can have a resistance of $10^6$ $\Omega$ to $10^9$ $\Omega$.

As the resistance of the resistor 5 is closer to $10^9$ $\Omega$, the change in frequency dependence upon degradation of the anticorrosive coating is smaller. It is then difficult to detect degradation of the anticorrosive coating 1. As the resistance of the resistor 5 is closer to $10^6$, the current flows less in the path A even if the anticorrosive coating 1 degrades. It is then difficult to detect degradation of the anticorrosive coating 1. Thus, the resistor 5 can have an optimum resistance of $5 \times 10^8$ $\Omega$ that is an intermediate value of $10^6$ $\Omega$ to $10^9$ $\Omega$.

The ammeter 6 is used to detect a current flowing through the parallel circuit including the paths A and B upon application of an AC voltage to this circuit. More specifically, the ammeter 6 can be implemented in an ammeter which measures a current based on voltage drop in a resistor connected between two points of an opened, target circuit portion, or a clamp meter capable of measuring a current in a circuit without the need for opening the circuit.

The AC power supply 7 applies an AC voltage to the parallel circuit including the paths A and B. As regards an AC voltage to be applied, a higher voltage leads to a higher current response sensitivity, but disadvantageously promotes an electrode reaction (an electrochemical reaction that occurs in the vicinity of the interface between the electrode 4 and the solution, and includes, for example, corrosion of the electrode 4; the same applies to the following description).

Hence, the AC voltage requires optimization. The applied AC voltage is preferably 10 mV (inclusive) to 50 mV (inclusive) to simultaneously achieve increased current response sensitivity and reduced progress of an electrode reaction.

The frequency is preferably set in the medium frequency range of 0.1 Hz to 1 kHz to reduce the influence of a change in temperature of the pipe line liquid 3 on the impedance.

The impedance meter 8 sends an instruction to apply an AC voltage at two or more predetermined frequencies to the AC power supply 7, obtains a detected current to the AC voltage from the ammeter 6, and divides the AC voltage by the detected current to calculate an impedance.

The corrosion resistance degradation determining unit 9 obtains impedances, successively measured by the impedance meter 8, at two or more predetermined frequencies, and determines degradation or non-degradation of the anticorrosive coating 1 based on the degree of agreement between the impedances. Preferably, the time interval between successive measurement operations is sufficiently shortened so that the difference in external environment between repetitions of measurement at two or more predetermined frequencies can be ignored.

The corrosion resistance degradation determining unit 9 can determine whether the anticorrosive coating 1 degrades at arbitrary time intervals. In the corrosion resistance degradation sensor 100 according to Embodiment 1, if the anticorrosive coating 1 is free from degradation, the current flows only through the resistor 5 and no current flows through the path including the anticorrosive coating 1. This significantly reduces the possibility that measurement for detection of degradation of the anticorrosive coating 1 may result in damage to the coating and the progress of corrosion of the coating.

Thus, the time interval between repetitions of determination as to whether the anticorrosive coating 1 has degraded can be extremely shortened. Supposedly, the corrosion resistance degradation determining unit 9 can appropriately determine whether the anticorrosive coating 1 degrades at intervals of approximately one month to one year in a typical facility system, such as a hot water supply and heating system.

Operation of Corrosion Resistance Degradation Sensor 100

The corrosion resistance degradation sensor 100 according to Embodiment 1 allows the AC power supply 7 to successively apply an AC voltage at two or more predetermined frequencies to the parallel circuit including the paths A and B, calculates impedances based on current responses to the frequencies, and detects degradation of the anticorrosive coating 1 based on the degree of agreement between the impedances. That is, the corrosion resistance degradation sensor 100 can detect degradation of the anticorrosive coating 1 by checking the frequency dependence of impedance.

A current flow path in the parallel circuit including the paths A and B shown in FIG. 2 varies depending on degradation or non-degradation of the anticorrosive coating 1. More specifically, the anticorrosive coating 1 free from degradation has a high resistance, and therefore prevents the current from flowing through the path A and allows the current to flow through only the path B. On the other hand, when the anticorrosive coating 1 degrades, it accordingly has a lower resistance, and this permits the current to flow through the path A.

Consequently, since no current flows through the path A while the anticorrosive coating 1 is free from degradation, the possibility that measurement may result in damage to the coating and the progress of corrosion of the coating can be kept low. Thus, such a state can be precisely detected in the form of impedance indicating a constant value obtained by the resistor 5 in the path B.

Although the impedance in the path B contains a resistance component generated only by the resistor 5, the impedance in the path A takes a complex value including a capacitance at the interface between the electrode 4 and the solution and accordingly provides electrical characteristics completely different from those in the path B. More specifically, the impedance in the path A including the interface between the electrode 4 and the solution significantly varies depending on frequency, while the impedance in the path B including the resistor 5 takes a constant value independently of frequency.

Supposedly, a change in external environment is likely to affect the above-described impedances but is not likely to affect the frequency dependence characteristics of the impedances. The difference in path will provide distinctly different frequency dependence characteristics.

More specifically, when the external environment changes as well as the above-mentioned case, the impedance response in the path A measured at an arbitrary time will significantly vary depending on frequency, and the impedance response in the path B measured at the arbitrary time will take a constant value independently of frequency.

When the external environment changes, therefore, it can accurately be detected whether the current flows through the path A or B by checking whether impedances successively measured at two or more predetermined frequencies agree with each other. Thus, degradation or non-degradation of the anticorrosive coating 1 can be detected based on the path through which the current flows.

As described above, the corrosion resistance degradation sensor 100 according to Embodiment 1 can be used to, while preventing damage to the anticorrosive coating and the progress of corrosion of this coating due to factors associated with measurement, accurately remove the influence of the external environment, and accurately detect degradation of the anticorrosive coating 1.

Anticorrosive Coating 1

The anticorrosive coating 1, serving as a target of the corrosion resistance degradation sensor 100 according to Embodiment 1, is formed on the entire inner surface of the pipe line in contact with the pipe line liquid 3 to prevent corrosion of the inner surface of the pipe. Examples of methods of forming an anticorrosive coating 1 include a method of applying an anticorrosive coating material to the inner surface of the pipe, and a method of adding a corrosion inhibitor for forming an anticorrosive coating 1 to the pipe line liquid 3.

With the method of applying an anticorrosive coating material to the inner surface of the pipe, a resin coating material for forming an insulating coating, for example, is applied to the inner surface of the pipe line. The thickness of the coating material can be adjusted depending on the required corrosion resistance.

In the method of adding a corrosion inhibitor for forming an anticorrosive coating 1 to the pipe line liquid 3, examples of the corrosion inhibitor include a precipitated coating corrosion inhibitor, such as benzotriazole or 8-quinolinol, an adsorbed coating corrosion inhibitor, such as tetraalkylammonium, and an oxide coating corrosion inhibitor, such as sodium nitrite, sodium molybdate, or sodium polyphosphate.

The mechanism of formation of the anticorrosive coating 1 by the corrosion inhibitor differs depending on the material of an object on which the anticorrosive coating 1 is formed. It is preferable to use a corrosion inhibitor optimum for the material of an object. More specifically, if the object is made of copper, a precipitated coating corrosion inhibitor, such as benzotriazole, is preferably used. If the object is made of iron, an oxide coating corrosion inhibitor, such as sodium nitrite, is preferably used.

Frequency Dependence of Impedance

In electrochemical impedance measurement, an electrical equivalent circuit model including a simulated electrode interface is constructed to evaluate a surface state and electrode reaction of the electrode 4. FIG. 4 illustrates a typical electrical equivalent circuit in which an electrode reaction at the interface between the electrode 4 and the solution is simulated.

The circuit includes an electric double layer capacitance Cdl which is formed at the interface between the electrode 4 and the solution and includes the influence of charges stored on the surface of a coating, a solution resistance Rs including the resistance of an electrolyte, and a charge transfer resistance Rct that represents a resistance component associated with electron exchange in an electrode reaction, and corresponds to the coating resistance of, for example, an oxide coating at the interface between the electrode 4 and the solution or the anticorrosive coating 1.

FIG. 4 illustrates a typical electrical equivalent circuit simulating an electrode reaction at the interface between the electrode 4 and the solution. The electrical equivalent circuit of FIG. 4 can represent a path established by the pipe on which the anticorrosive coating 1 is not formed, or which can be regarded as having the same state as that in which the anticorrosive coating 1 has degraded in the corrosion resistance degradation sensor 100 according to Embodiment 1 of the present invention, the pipe line liquid 3, and the electrode 4 placed within the pipe line.

An AC voltage is applied to the electrical equivalent circuit of FIG. 4, and an impedance is detected from a current response to the applied voltage. The following expression holds true for the detected impedance $Z_{total}$, depending on an applied angular frequency $\omega$.

[Math. 1]

$$Ztotal = Rs + \cfrac{1}{j\omega Cdl + \cfrac{1}{Rct}} \qquad \cdots (1)$$

In Expression (1), $Z_{total}$ approaches Rs when $\omega \to \infty$, and Rs + Rct when $\omega \to 0$. This means that information associated with the solution resistance is obtained in a high frequency range, information associated with the charge transfer resistance is obtained in addition to the solution resistance information in a low frequency range, and information associated with the electric double layer capacitance is obtained in addition to the solution resistance information and the charge transfer resistance information in a medium frequency range.

The "high frequency range" means herein a range above 1 kHz, the "low frequency range" means herein a range below 0.1 Hz, and the "medium frequency range" means herein a range between the former two ranges.

FIG. 5 is a graph illustrating the frequency dependence of impedance to an applied AC voltage in an electric circuit including the electrode 4 and the solution. More specifically, FIG. 5 illustrates the frequency dependence of impedance to the applied AC voltage in the electric circuit including the electrode 4 and the solution which can be represented as the electrical equivalent circuit of FIG. 4. A pair of copper electrodes 4 was used, the amplitude of the applied AC voltage was 10 mV, and the frequency range was 1 mHz to 100 kHz.

As illustrated in FIG. 5, although the impedance extracted from a current response in the circuit including the solution takes a constant value in each of the low frequency range of 0.1 Hz or below and the high frequency range of 1 kHz or above, but significantly varies depending on frequency in the medium frequency range of 0.1 Hz to 1 kHz in accordance with the electrical characteristics at the interface between the electrode 4 and the solution.

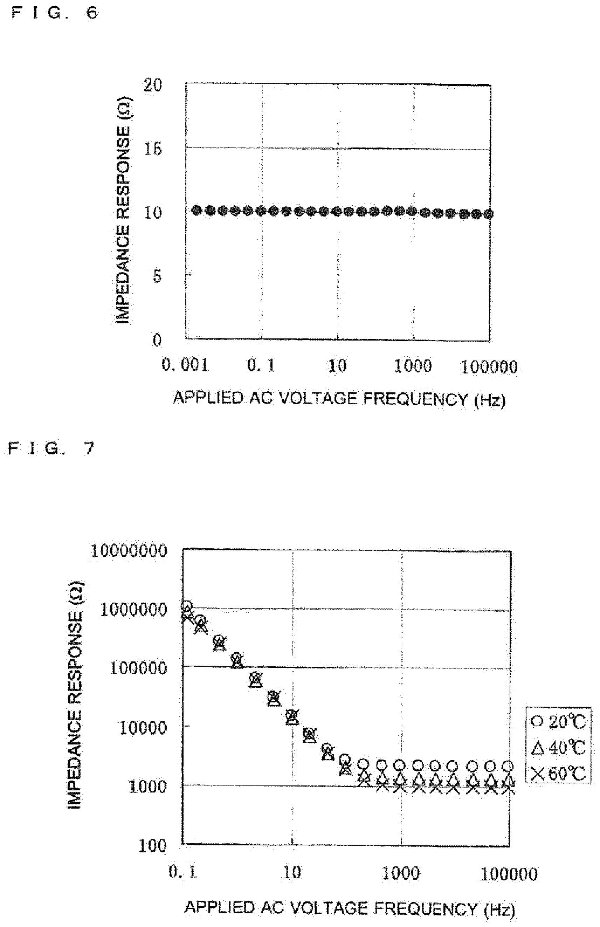

FIG. 6 is a graph illustrating the frequency dependence of impedance to an applied AC voltage in an electric circuit including only the resistor 5. A standard resistance of 10 $\Omega$ was used as the resistor 5, the amplitude of the applied AC voltage was 10 mV, and the frequency range was 1 mHz to 100 kHz.

The impedance extracted from a current response in the circuit including only the resistor 5 takes a constant value that agrees with the resistance of the resistor 5 at any frequency, and exhibits a response having a frequency dependence completely different from that of the impedance in the electric circuit including the electrode 4 and the solution illustrated in FIG. 5.

As described above, it can be accurately determined whether the target circuit is the circuit including the solution or the circuit including only the resistor 5, by using a pair of fixed frequencies for minimum and maximum impedances of impedance responses in the medium frequency range of 0.1 Hz to 1 kHz. The corrosion resistance degradation sensor 100 according to Embodiment 1 of the present invention detects a variation in frequency dependence upon a shift of the target circuit from the circuit including only the resistor 5 to the circuit including the solution in response to degradation of the anticorrosive coating 1, thus detecting degradation or non-degradation of the anticorrosive coating 1.

Two or more predetermined frequencies in the above-described [Configuration of Corrosion Resistance Degradation Sensor 100] preferably include a pair of frequencies for minimum and maximum impedances of impedance responses in the medium frequency range of 0.1 Hz to 1 kHz in the path A with no anticorrosive coating 1, that is, the path A including the conductive pipe 2 uncovered with the anticorrosive coating 1, the pipe line liquid 3, and the electrode 4, such that a change of the target circuit in response to degradation of the anticorrosive coating 1 can be precisely detected.

The impedance in the circuit including the solution and indicated by the path A in FIG. 2 will have frequency dependence which maximizes the impedance at a frequency of 0.1 Hz, and minimizes the impedance at a frequency of 1 kHz. As will be described in [Influence of External Environment on Impedance], the frequency dependence will remain the same when the external environment changes as well. On the other hand, the impedance in the circuit including the resistor 5 and indicated by the path B in FIG. 2 will take a constant value independently of frequency.

To clearly distinguish the circuit including the solution and the circuit including only the resistor 5 from each other, the two or more predetermined frequencies (two frequencies fa and fb will typically be described hereinafter for the sake of simplicity) in the above-described [Configuration of Corrosion Resistance Degradation Sensor 100] have to satisfy:

[Math.2]

$$ fa \neq fb \qquad \cdots (2) $$

If the frequencies fa and fb take close values, the impedances at the two frequencies also take close values. In this case, therefore, it may be difficult to detect frequency dependence, and it, in turn, may be difficult to distinguish the circuit including the solution and the circuit including only the resistor 5. Although the accuracy of impedance measurement depends on the type of device used for measurement, a difference in impedance of at least 10 % or more can be precisely detected.

FIG. 5 demonstrates that the impedance varies by approximately 10 % in the medium frequency range of 0.1 Hz to 1 kHz as the frequency changes by 10 Hz. Consequently, the frequencies preferably satisfy the following expression as well as Expression (2) so that the circuit including the solution and the circuit including only the resistor 5 are clearly distinguished from each other.

[Math.3]

$$ 10 \times fa < fb \qquad \cdots (3) $$

When the influence of a change in external environment is taken into account, the impedance may significantly vary depending on the temperature or composition of the solution at frequencies below 0.1 Hz and above 1 kHz. On the other hand, the influence of a change in solution temperature on the impedance is expected to be small in the medium frequency range of 0.1 Hz to 1 kHz.

Consequently, the frequencies preferably satisfy the following expression as well as Expressions (2) and (3) so that the influence of a change in external environment is reduced and the circuit including the solution and the circuit including only the resistor 5 are more clearly distinguished from each other.

[Math.4]

$$ 0.1 \ Hz \leq fa < fb \leq 1 \ kHz \qquad \cdots (4) $$

More specifically, optimum frequencies fa = 0.1 Hz and fb = 1 kHz that satisfy Expressions (2) to (4) can be set.

Influence of External Environment on Impedance

An impedance to be measured in the equivalent circuit of FIG. 2 of the corrosion resistance degradation sensor 100 according to Embodiment 1 may vary due to the influence of the external environment. Examples of factors that determine the external environment include the temperature and properties of the pipe line liquid 3.

FIG. 7 is a graph illustrating the influences of changes in temperature of the solution on the frequency dependence of impedance in the electric circuit including the electrode 4 and the solution. More specifically, FIG. 7 illustrates the frequency dependence of impedance to an applied AC voltage in the electric circuit, which can be represented as the electrical equivalent circuit of FIG. 4, including the electrode 4 and the solution at each of three temperatures of 20 °C, 40 °C, and 60 °C. A pair of copper electrodes 4 was used, the amplitude of the applied AC voltage was 10 mV, and the frequency range was 0.1 Hz to 100 kHz.

As illustrated in FIG. 7, the impedance in the high frequency range of 100 Hz or above is lower as the temperature of the solution is higher. The impedance in the high frequency range is expected to reflect the solution resistance. The solution resistance reduces with an increase in temperature, and this is expected to reduce the impedance in the high frequency range.

FIG. 7 demonstrates that a change in temperature has little influence on the impedance in the medium frequency range. The impedance in the medium frequency range is expected to reflect the electric double layer capacitance. In general, the electric conductivity of the anticorrosive coating 1 that determines the electric double layer capacitance is not affected by a change in temperature. Hence, the influence of a change in temperature on the impedance was not found in the medium frequency range.

The impedance in the low frequency range, which falls outside the frequency range measured in this case, will decrease with an increase in temperature. The impedance in the low frequency range is expected to reflect the charge transfer resistance. Upon activation of a reaction with an increase in temperature, the charge transfer resistance will lower, thus reducing the impedance.

Furthermore, FIG. 7 demonstrates that the impedances measured at those temperatures exhibit similar frequency dependences; the impedance in the low frequency range of 0.1 Hz or below takes a constant value, while the impedance in the medium frequency range of 0.1 Hz to 1 kHz significantly varies depending on frequency.

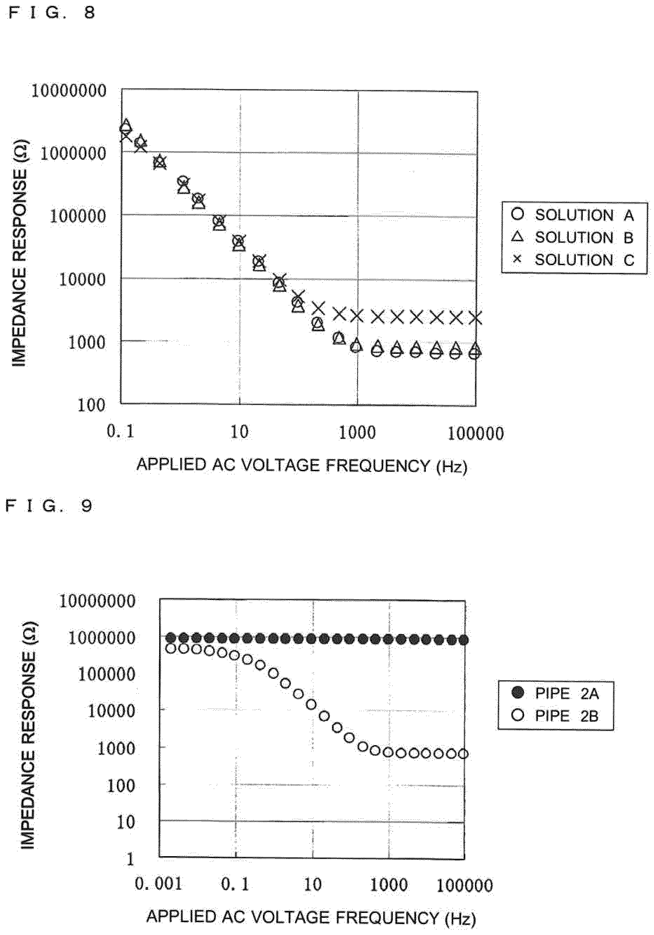

FIG. 8 is a graph illustrating the influences of changes in solution composition on the frequency dependence of impedance in the electric circuit including the electrode 4 and the solution. More specifically, FIG. 8 illustrates the frequency dependence of impedance to an applied AC voltage in the electric circuit, which can be represented as the electrical equivalent circuit of FIG. 4, including the electrode 4 and the solution in the use of each of three solutions having different compositions.

A solution A has an electric conductivity of 1.96 mS/cm, a solution B has an electric conductivity of 1.00 mS/cm, and a solution C has an electric conductivity of 0.43 mS/cm. A pair of copper electrodes 4 was used, the amplitude of the applied AC voltage was 10 mV, and the frequency range was 0.1 Hz to 100 kHz.

As illustrated in FIG. 8, the impedance in the high frequency range of 100 Hz or above is higher as the electric conductivity of the solution is lower. The impedance is expected to reflect a change in solution resistance inversely proportional to the electric conductivity. On the other hand, the impedance remained the same in the frequency range of less than 100 Hz, irrespective of the change in electric conductivity.

Since the impedance in the medium frequency range reflects the electric double layer capacitance component, and the impedance in the low frequency range reflects the charge transfer resistance, the influence of a change in solution resistance on the impedance was not found in these ranges.

FIG. 8 demonstrates that the impedances measured at those electric conductivities exhibit similar frequency dependences; the impedance in the low frequency range of 0.1 Hz or below takes a constant value, while the impedance in the medium frequency range of 0.1 Hz to 1 kHz significantly varies depending on frequency.

As described above, the frequency dependence of impedance to be measured in the equivalent circuit of FIG. 2 of the corrosion resistance degradation sensor 100 according to Embodiment 1 will not vary significantly when the external environment changes as well. More specifically, when the external environment changes as well, the impedance in the low frequency range of 0.1 Hz or below will take a constant value, and the impedance in the medium frequency range of 0.1 Hz to 1 kHz will vary significantly depending on frequency.

Again, when the external environment changes as well, the frequency dependence of impedance in the circuit including only the resistor 5 will not vary, or will take a constant value independently of frequency.

With the aforementioned arrangement, when the external environment changes as well, it can be accurately determined whether the target circuit is the circuit including the solution or the circuit including only the resistor 5, by using two or more predetermined frequencies.

More specifically, when the external environment changes as well, the corrosion resistance degradation sensor 100 according to Embodiment 1 of the present invention can detect a change in frequency dependence upon a shift of the target circuit from the circuit including only the resistor 5 to the circuit including the solution in response to degradation of the anticorrosive coating 1, thus detecting degradation or non-degradation of the anticorrosive coating 1.

Resistance of Resistor 5

As illustrated in FIG. 2, the corrosion resistance degradation sensor 100 according to Embodiment 1 of the present invention includes the electric circuit including the paths A and B connected in parallel with each other. In the corrosion resistance degradation sensor 100 according to Embodiment 1 of the present invention, the resistor 5 controls current flow in the parallel circuit. More specifically, the resistor 5 allows the current to flow through the path B including only the resistor 5 while the anticorrosive coating 1 is free from degradation, and flow through the path A including the pipe line liquid 3 if the anticorrosive coating 1 degrades.

The conditions under which the above-mentioned current paths are switched from each other will now be described with respect to the impedance $Z_{total}$ including the capacitance Cdl, the solution resistance Rs, and the charge transfer resistance Rct, the resistance Ri of the anticorrosive coating 1, and the resistance Rx of the resistor 5.

The corrosion resistance degradation sensor 100 detects degradation of the anticorrosive coating 1 by applying an AC voltage to the circuit formed by the series circuit including $Z_{total}$ and Ri and the resistor 5 connected in parallel with each other. If the anticorrosive coating 1 is free from degradation, Ri will be sufficiently greater than $Z_{total}$. Consequently, the current path is determined in accordance with the set of values of Ri and Rx. On the other hand, if the anticorrosive coating 1 degrades, the resistance Ri of the anticorrosive coating 1 can be regarded to be zero. Consequently, the current path is determined in accordance with the set of values of $Z_{total}$ and Rx.

The conditions of the resistance Rx of the resistor 5, required to allow the current to flow through only the path B including the resistor 5 if the anticorrosive coating 1 is free from degradation, and flow through the path A including the pipe line liquid 3 if the anticorrosive coating 1 degrades, have to satisfy:

[Math. 5]

$$Ztotal \le R_x << R_i \qquad \cdots (5)$$

More specifically, the resistor 5 has a resistance sufficiently less than the resistance Ri of the anticorrosive coating 1 and equal to or greater than a resistance measured in the path A with no anticorrosive coating 1, that is, the path A including the conductive pipe 2 uncovered with the anticorrosive coating 1, the pipe line liquid 3, and the electrode 4.

The anticorrosive coating 1 has a resistance of $10^9$ $\Omega$ or greater. In the use of typical tap water having an electric conductivity of approximately 100 to 200 $\mu$S/cm, the path A with no anticorrosive coating 1, that is, the path A including the conductive pipe 2 uncovered with the anticorrosive coating 1, the pipe line liquid 3, and the electrode 4 can have a resistance of approximately $10^6$ $\Omega$.

These resistances are very high in terms of typical conductivity. If a DC voltage is applied, no current will flow through the anticorrosive coating 1 and the path A with no anticorrosive coating 1. The anticorrosive coating 1 and the path A will exhibit the same electrochemical characteristics.

In the corrosion resistance degradation sensor 100 according to Embodiment 1 of the present invention, not a DC voltage but an AC voltage is applied for impedance measurement. The impedance varies depending on the frequency for the AC voltage. The low frequency range provides electrochemical characteristics similar to those obtained upon application of a DC voltage. The medium and high frequency ranges have higher rates of polarity inversion, and thus provide electrochemical characteristics completely different from those obtained upon application of a DC voltage.

In the corrosion resistance degradation sensor 100 according to Embodiment 1 of the present invention, therefore, the anticorrosive coating 1 (having a resistance of $10^9$ $\Omega$ or greater) and the path A (having a resistance of approximately $10^6$ $\Omega$) with no anticorrosive coating 1, that is, the path A including the conductive pipe 2 uncovered with the anticorrosive coating 1, the pipe line liquid 3, and the electrode 4 can be regarded as completely different targets for impedance measurement.

More specifically, these two targets which have very high resistances (a resistance of approximately $10^6$ $\Omega$ and a resistance of $10^9$ $\Omega$ or greater) in terms of typical conductivity and are regarded as having similar electrical characteristics in terms of low conductivity can be clearly distinguished from each other as two different targets exhibiting completely different electrochemical characteristics based on the difference in impedance component between the targets for impedance measurement.

Then, if the anticorrosive coating 1 is free from degradation, the anticorrosive coating 1 generates a resistance very greater than that of the resistor 5 because Rx << Ri. Consequently, the current is not allowed to flow through the path including the pipe line liquid 3, and is allowed to flow through only the path B including the resistor 5.

On the other hand, degradation of the anticorrosive coating 1 reduces Ri, thus permitting the current to flow through the anticorrosive coating 1. Since $Z_{total} \le$ Rx, the current flows through the path A including the pipe line liquid 3.

The resistance Rx of the resistor 5 that satisfies Expression (5) can be expressed as:

[Math. 6]

$$R_x = Ztotal + \alpha \times |R_i - Ztotal| \qquad \cdots (6)$$

where $\alpha$ is a constant of 0 (inclusive) to 1 (exclusive). The degree of degradation of the anticorrosive coating 1 to be detected can be controlled based on the value of $\alpha$.

When $\alpha = 0$, the resistance of the resistor 5 is equal to that provided in a state where the anticorrosive coating 1 has degraded completely. No current flows through the path A including the pipe line liquid 3 unless the anticorrosive coating 1 degrades completely. Thus, the frequency dependence of impedance in the circuit including the solution described above in [Frequency Dependence of Impedance] will not appear unless the anticorrosive coating 1 degrades completely.

The degree of degradation of the anticorrosive coating 1 that can be detected by the corrosion resistance degradation sensor 100 according to Embodiment 1 corresponds to the state where the anticorrosive coating 1 has degraded completely.

When $\alpha > 0$, the resistance of the resistor 5 is greater than that obtained when the anticorrosive coating 1 has degraded completely. Consequently, a state before the anticorrosive coating 1 completely degrades can be detected. For example, when $\alpha = 0.5$, a state where the resistance of the anticorrosive coating 1 is reduced to a half can be detected.

If the thickness of the anticorrosive coating 1 is reduced evenly, the state where the resistance of the anticorrosive coating 1 is reduced to a half means that the thickness of the anticorrosive coating 1 is half that before degradation.

As described above, the degree of degradation of the anticorrosive coating 1 that can be detected by the corrosion resistance degradation sensor 100 according to Embodiment 1 can be controlled based on the value of $\alpha$ in Expression (6).

More specifically, the resistance of the resistor 5 can be determined as follows. Impedances to a voltage applied at predetermined frequencies are measured in the circuit including the pipe uncovered with the anticorrosive coating 1, the pipe line liquid 3, and the electrode 4. A maximum impedance $Z_{total}$ of such impedance responses and the resistance Ri of the anticorrosive coating 1 obtained from physical property values are substituted into Expression (6).

The value of $\alpha$ is set in accordance with the degree of degradation of the anticorrosive coating 1 to be detected. The resistance Rx is calculated by using Expression (6) and the value of $\alpha$. This resistance Rx is used as the resistance of the resistor 5. The above-described maximum impedance can be easily obtained by measurement before the anticorrosive coating 1 is formed.

Since the impedance in the circuit including the pipe uncovered with the anticorrosive coating 1, the pipe line liquid 3, and the electrode 4 varies depending on frequency, the predetermined frequencies preferably fall within a frequency band including all the frequencies of a voltage applied for measurement to detect degradation of the anticorrosive coating 1, so that the resistance of the resistor 5 appropriately reflects an impedance measured when the anticorrosive coating 1 has degraded.

Determination as to Whether Anticorrosive Coating Has Degraded

The corrosion resistance degradation sensor 100 according to Embodiment 1 detects degradation of the anticorrosive coating 1 based on a significant change in frequency dependence upon a shift of the target circuit from the path B having an impedance that remains constant independently of frequency to the path A having an impedance that largely depends on frequency, as described earlier in [Frequency Dependence of Impedance].

That is, the corrosion resistance degradation sensor 100 according to Embodiment 1 is capable of detecting degradation of the anticorrosive coating 1 based on the degree of agreement between impedances to an AC voltage at two or more predetermined frequencies.

The difference between two arbitrary impedances to an AC voltage at two or more predetermined frequencies in the target circuit of the corrosion resistance degradation sensor 100 according to Embodiment 1 is generated due to factors associated with the frequency dependence of impedance in the target circuit.

Accordingly, the difference between two arbitrary impedances to an AC voltage at two or more predetermined frequencies is equal to or less than the difference between minimum and maximum impedances of the frequency dependence of impedance in the target circuit. As described above in [Frequency Dependence of Impedance], the difference between the minimum and maximum values of the frequency dependence is largest when the anticorrosive coating 1 degrades.

Accordingly, the difference between two arbitrary impedances to an AC voltage at two or more predetermined frequencies in the target circuit of the corrosion resistance degradation sensor 100 according to Embodiment 1 is expected to be equal to or less than the difference $\Delta Z$ between the minimum and maximum impedances in the frequency range of 0.1 Hz (inclusive) to 1 kHz (inclusive) in the path A with no anticorrosive coating 1 corresponding to the state where the anticorrosive coating 1 has degraded.

The corrosion resistance degradation sensor 100 according to Embodiment 1 determines, based on the degree of agreement between two arbitrary impedances to an AC voltage at two or more predetermined frequencies, whether the anticorrosive coating 1 has degraded. The difference $\Delta Z$ is used as a reference value for the degree of agreement.

More specifically, if the difference between any pair of arbitrary impedances to an AC voltage at two or more predetermined frequencies is less than $\Delta Z/s$, these impedances agree with each other, and it is determined that the anticorrosive coating 1 is free from degradation. If this difference is equal to or greater than $\Delta Z/s$, these impedances disagree with each other, and it is determined that the anticorrosive coating 1 has degraded.

The above-described value s defines a reference used to determine the degree of agreement between the impedances. As the value s is greater, the degree of agreement between the impedances can be detected more strictly. Thus, a change in frequency dependence caused by degradation of the anticorrosive coating 1 can be detected earlier.

Demonstrations of Operation of Corrosion Resistance Degradation Sensor 100

FIG. 9 is a graph illustrating the frequency dependences of impedance to an applied AC voltage in the corrosion resistance degradation sensor 100 according to Embodiment 1 of the present invention. As target pipes each having its inner surface covered with the anticorrosive coating 1, a conductive pipe 2A with the anticorrosive coating 1 free from degradation, and a conductive pipe 2B with the anticorrosive coating 1 degraded were used.

Impedance measurement conditions were set such that the amplitude of the applied AC voltage was 10 mV and the frequency range was 1 mHz to 100 kHz. Referring to FIG. 9, solid circles represent the conductive pipe 2A with the anticorrosive coating 1 free from degradation, and open circles represent the conductive pipe 2B with the degraded anticorrosive coating 1.

As regards the resistance of the resistor 5, impedances in the circuit including the pipe uncovered with the anticorrosive coating 1, the pipe line liquid 3, and the electrode 4 were measured in the frequency range of 1 mHz to 100 kHz under the above-described impedance measurement conditions and a maximum impedance of 876 k$\Omega$ was determined. The resistance of the resistor 5 was set assuming the value of $\alpha$ to be 0 in Expression (6) described above in [Resistance of Resistor 5], so that a state where the anticorrosive coating 1 has completely degraded can be detected.

Since the anticorrosive coating 1 has a resistance of $10^9 \ \Omega \cdot cm^2$, which is sufficiently greater than the resistance of the resistor 5, the resistance of the resistor 5 satisfies the conditions under which the current is allowed to flow through only the path including the resistor 5 if the anticorrosive coating 1 is free from degradation, and flow through the path including the pipe line liquid 3 if the anticorrosive coating 1 degrades.

Although the resistance of the anticorrosive coating 1 was sufficiently greater than that of the resistor 5 in the above-described pipes serving as target circuits, the resistance of the anticorrosive coating 1 is preferably increased by controlling, for example, the type or thickness of the anticorrosive coating 1 if the resistance of the anticorrosive coating 1 is not sufficiently greater than that of the resistor 5.

Referring to FIG. 9, the impedance response in the conductive pipe 2A with the anticorrosive coating 1 free from degradation takes a constant value independently of frequency. Whereas the impedance responses in the conductive pipe 2B with the degraded anticorrosive coating 1 in the low frequency range of 0.1 Hz or below and the high frequency range of 1 kHz or above were less affected by the difference in frequency, and take a constant value, the impedance in this pipe in the medium frequency range of 0.1 Hz (inclusive) to 1 kHz (inclusive) significantly varies depending on frequency.

As described above in [Frequency Dependence of Impedance], the difference in frequency dependence of impedance between the impedances that depends on degradation or non-degradation of the anticorrosive coating 1 appears because the path through which the current flows in the parallel circuit including the paths A and B, illustrated in FIG. 2, shifts depending on whether the anticorrosive coating 1 has degraded. More specifically, the path A as a target in which degradation of the anticorrosive coating 1 is to be detected is connected in parallel with the path B including the resistor 5 having the resistance set in the above-described manner, thus producing the following effect.

In the conductive pipe 2A with the anticorrosive coating 1 free from degradation, no current flowed through the path A but the current flowed through the path B because of the high resistance of the anticorrosive coating 1. In the circuit including the conductive pipe 2B with the degraded anticorrosive coating 1, the current also flowed through the path A because of a reduction in resistance of the anticorrosive coating 1.

Since no current flowed through the path A in the conductive pipe 2A with the anticorrosive coating 1 free from degradation, the possibility that measurement may result in damage to the coating and the progress of corrosion of the coating can be reduced. The state where the anticorrosive coating 1 is free from degradation can be accurately detected as impedances, which are generated by the resistor 5 in the path B and take a constant value.

On the other hand, the impedance responses obtained in the conductive pipe 2B with the degraded anticorrosive coating 1 significantly vary depending on frequency in the medium frequency range of 0.1 Hz to 1 kHz. These impedances exhibit the frequency dependence completely different from that obtained in the conductive pipe 2A.

As regards the above-described two or more predetermined frequencies, frequencies of 0.1 Hz and 1 kHz can be used based on the conditions for the two or more predetermined frequencies described above in [Frequency Dependence of Impedance].

In the use of these frequencies, as illustrated in FIG. 9, the impedance at 0.1 Hz agrees with that at 1 kHz in the conductive pipe 2A, so that non-degradation of the anticorrosive coating 1 can be detected. In addition, the impedance at 0.1 Hz significantly differs from that at 1 kHz in the conductive pipe 2B, so that degradation of the anticorrosive coating 1 can be detected.

The corrosion resistance degradation sensor 100 according to Embodiment 1 can be used to, while preventing damage to the anticorrosive coating and the progress of corrosion of this coating due to factors associated with measurement, detect a distinct change in frequency dependence caused by degradation of the anticorrosive coating 1, thus accurately removing the influence of the external environment and accurately detecting degradation of the anticorrosive coating 1.

As described above, the corrosion resistance degradation sensor 100 includes the conductive pipe 2 having its inner surface covered with the anticorrosive coating 1, the electrode 4 insulated from the conductive pipe 2 and placed in contact with the liquid within the conductive pipe 2, the resistor 5 having its one end connected to the outer surface of the conductive pipe 2, the AC power supply 7 having its one terminal connected to the conductive pipe 2 and its other terminal connected to the electrode 4 and the resistor 5, and the detecting unit that detects degradation or non-degradation of the anticorrosive coating based on the frequency dependence of impedance response to the AC voltage of the AC power supply 7.

Therefore, the corrosion resistance degradation sensor 100 can be used to, while suppressing damage to the coating and the progress of corrosion of the coating due to factors associated with measurement, remove the influence of the external environment, and properly detect the state of degradation of the anticorrosive coating 1.

The resistor 5 has a resistance that is less than the resistance of the anticorrosive coating 1 and equal to or greater than a resistance measured in the circuit including the conductive pipe 2 having its inner surface uncovered with the anticorrosive coating 1, the liquid in the conductive pipe, and the electrode 4 placed within the pipe line defined by the conductive pipe.

An AC voltage has a plurality of predetermined frequencies of 0.1 Hz (inclusive) to 1 kHz (inclusive).

The predetermined frequencies for an AC voltage include a pair of frequencies for maximum and minimum impedances of impedance responses measured at the frequencies of 0.1 Hz (inclusive) to 1 kHz (inclusive) in the circuit including the conductive pipe 2 having its inner surface uncovered with the anticorrosive coating 1, the liquid in the conductive pipe, and the electrode 4 placed within the pipe line defined by the conductive pipe.

Although it is difficult to detect non-degradation of the anticorrosive coating 1 because of its very high resistance, the present invention allows accurate detection of non-degradation of the anticorrosive coating 1 because a sufficiently large current to be detected flows through the resistor 5 having a resistance sufficiently lower than that of the anticorrosive coating 1 free from degradation. The anticorrosive coating 1 free from degradation allows the current to flow through only the resistor 5, while not allowing it to flow through the path including the anticorrosive coating 1.

Thus, the possibility that measurement for detection of degradation of the anticorrosive coating 1 may result in damage to the coating and the progress of corrosion of the coating can be significantly reduced. In addition, since the electrical characteristics of the target circuit markedly change due to degradation of the anticorrosive coating 1, degradation of the anticorrosive coating 1 can be detected as a large change in the frequency dependence of impedance. Consequently, the influence of the external environment can be accurately removed and degradation of the anticorrosive coating 1 can be detected.

Embodiment 2

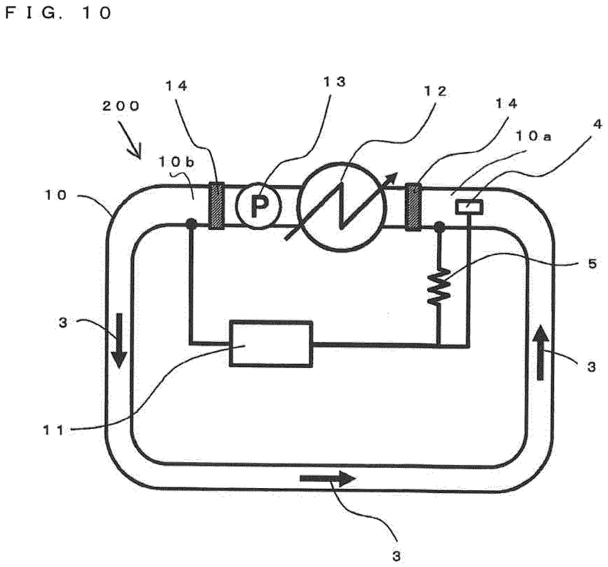

FIG. 10 is a schematic diagram illustrating an exemplary configuration of a hot water supply and heating system 200 according to Embodiment 2 of the present invention. The hot water supply and heating system 200 includes a corrosion resistance degradation sensor 100. The hot water supply and heating system 200 is capable of supplying hot water to, for example, a bathtub, a bathroom, and a kitchen, and heating rooms using heat generated by a heat source unit.

The corrosion resistance degradation sensor 100 in the hot water supply and heating system 200 can accurately detect degradation of an anticorrosive coating 1 extensively covering the inner surface of a conductive pipe 2 of the hot water supply and heating system 200.

Configuration of Hot Water Supply and Heating System 200 with Corrosion Resistance Degradation Sensor 100

As illustrated in FIG. 10, the hot water supply and heating system 200 includes a cooling target 12, a circulating pump 13, insulating couplings 14 connected to the two ends of an assembly of the cooling target 12 and the circulating pump 13, a corrosion-resistant inner-surface pipe 10 connected at the two ends, namely, one end 10a and another end 10b to the insulating couplings 14, an electrode 4 placed inside the end 10a of the corrosion-resistant inner-surface pipe 10 such that the electrode 4 is in contact with a pipe line liquid 3 and kept insulated from the corrosion-resistant inner-surface pipe 10, a resistor 5 having its one end connected to the outer surface of the end 10a of the corrosion-resistant inner-surface pipe 10, and an impedance analysis device 11 having its one terminal connected to a terminal leading from the end 10b of the corrosion-resistant inner-surface pipe 10, and its other terminal connected to a terminal leading from the electrode 4 and the resistor 5.

The corrosion resistance degradation sensor 100 in the hot water supply and heating system 200 includes the corrosion-resistant inner-surface pipe 10, the electrode 4, the resistor 5, and the impedance analysis device 11. The corrosion-resistant inner-surface pipe 10 includes the anticorrosive coating 1 and the conductive pipe 2 in FIG. 1. The impedance analysis device 11 includes the ammeter 6, the AC power supply 7, the impedance meter 8, and the corrosion resistance degradation determining unit 9 in FIG. 1.

The cooling target 12 corresponds to, for example, an indoor or outdoor heat exchanger that efficiently transfers heat from a high temperature object to a low temperature object, a radiator that radiates excess generated heat, or a hot water supply tank that stores the pipe line liquid 3 for cyclical supply.

The circulating pump 13 circulates the pipe line liquid 3 flowing through a pipe line defined by the corrosion-resistant inner-surface pipe 10 and the cooling target 12.

The insulating coupling 14, which is disposed between the corrosion-resistant inner-surface pipe 10 and each of the cooling target 12 and the circulating pump 13, blocks conduction of a current to flow between them. The insulating coupling 14 contains, for example, an insulating resin.

The corrosion resistance degradation sensor 100 in the hot water supply and heating system 200, other than the cooling target 12, the circulating pump 13, and the insulating couplings 14, according to Embodiment 2 of the present invention may have the same configuration as that of the corrosion resistance degradation sensor 100 according to Embodiment 1 of the present invention described above in [Configuration of Corrosion Resistance Degradation Sensor 100].

However, in the above-mentioned arrangement, it is often difficult to dispose the corrosion resistance degradation sensor 100 in a facility system, such as an existing hot water supply and heating system 200 including no corrosion resistance degradation sensor 100. For example, the small inner diameter of the corrosion-resistant inner-surface pipe 10 in the existing hot water supply and heating system 200 may hinder placement of the electrode 4 within the pipe line.

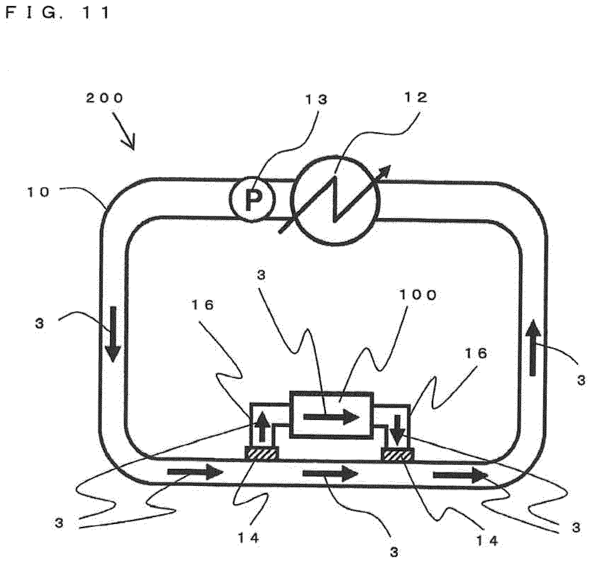

FIG. 11 illustrates an example of the hot water supply and heating system 200 including the corrosion resistance degradation sensor 100 connected by bypassing. Each bypass pipe 16 has its one end connected to the corrosion-resistant inner-surface pipe 10 via the insulating coupling 14, and its other end connected to the corrosion resistance degradation sensor 100. The bypass pipe 16 can be made of the same material as that of the corrosion-resistant inner-surface pipe 10.

More specifically, two bypass pipes 16 are arranged: one bypass pipe 16 having its one end connected to the corrosion-resistant inner-surface pipe 10 via the insulating coupling 14, and its other end connected to the corrosion resistance degradation sensor 100; and the other bypass pipe 16 having its one end connected to the corrosion resistance degradation sensor 100, and its other end connected to the corrosion-resistant inner-surface pipe 10 via the insulating coupling 14. One bypass pipe 16, the corrosion resistance degradation sensor 100, and the other bypass pipe 16 are aligned to form a path that bypasses the corrosion-resistant inner-surface pipe 10.

Note that the electrode 4 need only be placed as in, for example, the foregoing case described with reference to FIG. 3. For instance, the electrode 4 may be placed on the side of the bypass pipe 16 connected to the corrosion-resistant inner-surface pipe 10 via the insulating coupling 14. With this arrangement, the corrosion resistance degradation sensor 100 can include the electrode 4 independently of the inner diameter of the corrosion-resistant inner-surface pipe 10, and detect degradation of the anticorrosive coating 1 covering the inner surface of the corrosion-resistant inner-surface pipe 10.

As illustrated in FIG. 11, the insulating couplings 14 and the bypass pipes 16 facilitate connection of the corrosion resistance degradation sensor 100 to the corrosion-resistant inner-surface pipe 10 of the existing hot water supply and heating system 200. Such a configuration shortens the installation time and allows the corrosion resistance degradation sensor 100 to be installed in any facility system, for example, the hot water supply and heating system 200, independently of the inner diameter of the corrosion-resistant inner-surface pipe 10.

Operation of Hot Water Supply and Heating System 200 with Corrosion Resistance Degradation Sensor 100

In the hot water supply and heating system 200 according to Embodiment 2 of the present invention, the circulating pump 13 circulates the pipe line liquid 3 through the corrosion-resistant inner-surface pipe 10 and the cooling target 12, thus heating or cooling the cooling target 12.

The corrosion resistance degradation sensor 100 in the hot water supply and heating system 200 can detect, for the entire corrosion-resistant inner-surface pipe 10, degradation of the anticorrosive coating 1 extensively covering the inner surface of the corrosion-resistant inner-surface pipe 10, serving as a circulation path for the pipe line liquid 3.

The cooling target 12 and the circulating pump 13 are connected to the corrosion-resistant inner-surface pipe 10 via the insulating couplings 14 so as to be kept insulated from the corrosion-resistant inner-surface pipe 10. This can prevent the influences of the cooling target 12 and the circulating pump 13 on detection of degradation of the anticorrosive coating 1.

More specifically, when the AC power supply 7 applies an AC voltage in measurement for detection of degradation of the anticorrosive coating 1 as well, no current flows through the cooling target 12 and the circulating pump 13. An electrical equivalent circuit of the corrosion resistance degradation sensor 100 in the hot water supply and heating system 200 does not include factors corresponding to the cooling target 12 and the circulating pump 13.

That is, the electrical equivalent circuit of the corrosion resistance degradation sensor 100 in the hot water supply and heating system 200 according to Embodiment 2 of the present invention can be represented by the same circuit diagram as that of FIG. 2 representing the corrosion resistance degradation sensor 100 according to Embodiment 1.

Therefore, the corrosion resistance degradation sensor 100 in the hot water supply and heating system 200 according to Embodiment 2 of the present invention operates in the same manner as described in [Operation of Corrosion Resistance Degradation Sensor 100].

More specifically, if the anticorrosive coating 1 is free from degradation, the current flows through only the path including the conductive pipe 2 of the corrosion-resistant inner-surface pipe 10, and the resistor 5, so that the possibility that measurement may result in damage to the coating and the progress of corrosion of the coating can be reduced.

The measured impedance does not vary depending on frequency, and takes a constant value.

On the other hand, if the anticorrosive coating 1 degrades at any position in the corrosion-resistant inner-surface pipe 10, the current flows into the pipe line at the position where the anticorrosive coating 1 has degraded, so that the current flows through the path including the pipe line liquid 3 and the electrode 4 and the impedance varies depending on frequency. Thus, degradation or non-degradation of the anticorrosive coating 1 can be detected based on the difference between these frequency dependences.

As described above, the hot water supply and heating system 200 includes the conductive pipe 2 for circulation having its inner surface covered with the anticorrosive coating 1, the cooling target 12 heated or cooled by the liquid in the pipe, the circulating pump 13 that circulates the liquid through the pipe, and the corrosion resistance degradation sensor 100 connected to the pipe 2. The conductive pipe 2 is connected to an assembly of the cooling target 12 and the circulating pump 13 via the insulating couplings 14 arranged at the two ends of the assembly.

The hot water supply and heating system 200 including the corrosion resistance degradation sensor 100 according to Embodiment 2 of the present invention can be used to, while preventing damage to the anticorrosive coating and the progress of corrosion of this coating due to factors associated with measurement, accurately remove the influence of the external environment, and accurately detect degradation of the anticorrosive coating 1 extensively covering the inner surface of the conductive pipe, serving as a circulation path for the pipe line liquid.

List of Reference Signs

1    anticorrosive coating
2    conductive pipe
3    pipe line liquid
4    electrode
5    resistor
6    ammeter
7    AC power supply
8    impedance meter
9    corrosion resistance degradation determining unit
10   corrosion-resistant inner-surface pipe
11   impedance analysis device
12   cooling target
13   circulating pump
14   insulating coupling
15   insulating seal
16   bypass pipe
100  corrosion resistance degradation sensor
200  hot water supply and heating system

**Claims**

**1.** A corrosion resistance degradation sensor (100) comprising:

- a conductive pipe (2) having an inner surface thereof covered with an anticorrosive coating (1), and being filled with a liquid (3);
- an electrode (4) insulated from the conductive pipe (2) and placed in contact with the liquid (3) within the conductive pipe (2);
- a resistor (5) having one end thereof connected to an outer surface of the conductive pipe (2);
- an AC power supply (7) having one terminal thereof connected to the conductive pipe (2), and another terminal thereof connected to the electrode (4) and the resistor (5); and
- a detecting unit (9) that detects degradation or non-degradation of the anticorrosive coating (1) based on frequency dependence of impedance response to an AC voltage of the AC power supply (7); and

wherein the resistor (5) has a resistance that is less than a resistance of the anticorrosive coating (1) and is not less than a resistance measured in a circuit including a second conductive pipe (2) having the inner surface thereof uncovered with the anticorrosive coating (1), the liquid (3) in the second conductive pipe (2), and the electrode (4) placed within the second conductive pipe (2).

2. The corrosion resistance degradation sensor (100) according to claim 1, wherein the AC voltage has a plurality of predetermined frequencies of 0.1 Hz, inclusive, to 1 kHz, inclusive.

3. The corrosion resistance degradation sensor (100) according to claim 1, wherein predetermined frequencies for the AC voltage include a pair of frequencies for a maximum impedance and a minimum impedance of impedance responses measured at frequencies of 0.1 Hz, inclusive, to 1 kHz, inclusive, in a circuit including the second conductive pipe (2) having the inner surface thereof uncovered with the anticorrosive coating (1), the liquid (3) in the second conductive pipe (2), and the electrode (4) placed within the second conductive pipe (2).

4. A hot water supply and heating system (200), comprising:

- a cooling target (12) heated or cooled by a liquid (3) in a pipe;
- a circulating pump (13) that circulates the liquid (3) through the pipe;
- a conductive pipe (10) for liquid circulation having an inner surface thereof covered with an anticorrosive coating (1), the conductive pipe (10) being connected to two ends (10a, 10b) of the pipe having the cooling target (12) and the circulating pump (13) via insulating couplings (14); and
- a corrosion resistance degradation sensor (100) according to any one of claims 1 to 3.

5. A hot water supply and heating system (200), comprising:

- a corrosion resistance degradation sensor (100)
according to any one of claims 1 to 3;
- a first pipe (10) that forms the conductive pipe (2) and has an inner surface thereof covered with an anticorrosive coating (1);
- a cooling target (12) heated or cooled by a liquid (3) flowing through the first pipe;
- a circulating pump (13) that circulates the liquid (3);
- a first bypass pipe (16) that forms the conductive pipe (2); and
- a second bypass pipe (16) that forms the conductive pipe (2),

wherein the first bypass pipe (16) has one end thereof connected to the first pipe (10) via insulating coupling (14), and another end thereof connected to the corrosion resistance degradation sensor (100),
wherein the second bypass pipe (16) has one end thereof connected to the corrosion resistance degradation sensor (100), and another end thereof connected to the first pipe (10) via insulating coupling (14), and
wherein the electrode (4) of the corrosion resistance degradation sensor (100) is placed in contact with the liquid (3) within one of the first bypass pipe (16) and the second bypass pipe (16).

**Patentansprüche**

1. Korrosionsbeständiger Degradierungssensor (100), welcher Folgendes umfasst:

- ein leitfähiges Rohr (2), welches eine Innenfläche mit einer korrosionsbeständigen Beschichtung (1) aufweist und mit einer Flüssigkeit (3) gefüllt ist;
- eine Elektrode (4), welche gegen das leitfähige Rohr (2) isoliert ist und in Kontakt mit der sich im leitfähigen Rohr (2) befindlichen Flüssigkeit (3) gebracht wird;
- einen Widerstand (5), von welchem ein Ende mit einer Außenfläche des leitfähigen Rohres (2) verbunden ist;
- eine Wechselstromversorgung (7), von welcher eine Klemme mit dem leitfähigen Rohr (2), und eine andere Klemme mit der Elektrode (4) und dem Widerstand (5) verbunden ist; und
- eine Erfassungseinheit (9), welche basierend auf der Frequenzabhängigkeit des Impedanz-Ansprechens auf eine Wechselstromspannung der Wechselstromversorgung (7) die Degradierung oder Nicht-Degradierung der korrosionsbeständigen Beschichtung (1) erfasst; und

wobei der Widerstand (5) einen Widerstand aufweist, der geringer als ein Widerstand der korrosionsbeständigen Schicht (1) und nicht geringer als ein Widerstand ist, der in einem Schaltkreis gemessen wird, welcher ein zweites leitfähiges Rohr (2) mit einer nicht von der korrosionsbeständigen Beschichtung (1) bedeckten Innenseite, die Flüssigkeit (3) im zweiten leitfähigen Rohr (2) sowie die im zweiten leitfähigen Rohr (2) angeordnete Elektrode (4) umfasst.

2. Korrosionsbeständiger Degradierungssensor (100) gemäß Anspruch 1,
wobei die Wechselstromversorgung eine Vielzahl vorbestimmter Frequenzen von einschließlich 0,1 Hz bis einschließlich 1 kHz aufweist.

3. Korrosionsbeständiger Degradierungssensor (100) gemäß Anspruch 1,
wobei in einem Schaltkreis, in welchem ein zweites leitfähiges Rohr (2) mit einer nicht von der korrosionsbeständigen Beschichtung (1) bedeckten Innenseite, die Flüssigkeit (3) im zweiten leitfähigen Rohr (2) sowie die im zweiten leitfähigen Rohr (2) angeordnete Elektrode (4) enthalten sind, die für die Wechselstromspannung vorgesehenen Frequenzen ein Paar Frequenzen für ein Höchstimpedanz- und ein Mindestimpedanz-Ansprechen von einschließlich 0,1 Hz bis einschließlich 1 kHz beinhalten.

4. Warmwasserversorgungs- und Heizsystem (200), welches Folgendes umfasst:

- ein Kühlungsziel (12), welches durch eine Flüssigkeit (3) in einem Rohr geheizt oder gekühlt wird;
- eine Umwälzpumpe (13), welche die Flüssigkeit (3) durch das Rohr wälzt;
- ein leitfähiges Rohr (10) zur Flüssigkeitsumwälzung, welches eine mit der korrosionsbeständigen Beschichtung (1) bedeckte Innenfläche aufweist, wobei das leitfähige Rohr (10) über isolierende Verbindungsstücke (14) mit zwei Enden (10a, 10b) des Kühlungsziel aufweisenden Rohrs (12) und der Umwälzpumpe (13) verbunden ist; und
- einen korrosionsbeständigen Degradierungssensor (100) gemäß einem der Ansprüche 1 bis 3.

5. Warmwasserversorgungs- und Heizsystem (200), welches Folgendes umfasst:

- einen korrosionsbeständigen Degradierungssensor (100) gemäß einem der Ansprüche 1 bis 3;
- ein erstes Rohr (10), welches das leitfähige Rohr (2) bildet und eine mit der korrosionsbeständigen Beschichtung (1) bedeckte Innenfläche aufweist;
- ein Kühlungsziel (12), welches durch eine durch das erste Rohr fließende Flüssigkeit (3) geheizt oder gekühlt wird;
- eine Umwälzpumpe (13), welche die Flüssigkeit (3) umwälzt;
- ein erstes, das leitfähige Rohr (2) bildendes Bypass-Rohr (16); und
- ein zweites, das leitfähige Rohr (2) bildendes Bypass-Rohr (16),

wobei ein Ende des ersten Bypass-Rohrs (16) über ein isolierendes Verbindungsstück (14) mit dem ersten Rohr (10) verbunden ist, und ein anderes Ende davon mit dem korrosionsbeständigen Degradierungssensor (100) verbunden ist,
wobei ein Ende des zweiten Bypass-Rohrs (16) mit dem korrosionsbeständigen Degradierungssensor (100) verbunden ist, und ein anderes Ende davon über ein isolierendes Verbindungsstück (14) mit dem ersten Rohr (10) verbunden ist, und wobei die Elektrode (4) des korrosionsbeständigen Degradierungssensors (100) mit der Flüssigkeit (3) innerhalb des ersten Bypass-Rohrs (16) oder des zweiten Bypass-Rohrs (16) in Kontakt gebracht wird.

## Revendications

1. Détecteur de dégradation de résistance à la corrosion (100) comprenant :

- un tube conducteur (2) ayant une surface intérieure couverte avec un revêtement anticorrosion (1), et étant rempli d'un liquide (3) ;
- une électrode (4) isolée vis-à-vis du tube conducteur (2) et placée en contact avec le liquide (3) à l'intérieur du tube conducteur (2) ;
- une résistance (5) dont une extrémité est connectée à une surface extérieure du tube conducteur (2) ;
- une alimentation d'énergie à courant alternatif CA (7) ayant une borne connectée au tube conducteur (2), et une autre borne connectée à l'électrode (4) et à la résistance (5) ; et
- une unité de détection (9) qui détecte la dégradation ou la non-dégradation du revêtement anticorrosion (1) en se basant sur la dépendance en fréquence de la réponse d'impédance à une tension CA de l'alimentation d'énergie CA (7) ; et

dans lequel la résistance (5) a une résistance qui est inférieure à une résistance du revêtement anticorrosion (1) et qui n'est pas inférieure à une résistance mesurée dans un circuit incluant un second tube conducteur (2) dont la surface intérieure n'est pas couverte avec le revêtement anticorrosion (1), le liquide (3) dans le second tube conducteur (2), et l'électrode (4) placée à l'intérieur du second tube conducteur (2).

2. Détecteur de dégradation de résistance à la corrosion (100) selon la revendication 1, dans lequel la tension CA présente une pluralité de fréquences prédéterminées de 0,1 Hz, inclus, jusqu'à 1 kHz, inclus.

3. Détecteur de dégradation de résistance à la corrosion (100) selon la revendication 1, dans lequel des fréquences prédéterminées pour la tension CA incluent une paire de fréquences pour une impédance maximum et pour une impédance minimum des réponses d'impédance mesurées à des fréquences de 0,1 Hz, inclus, jusqu'à 1 kHz, inclus, dans un circuit incluant le second tube conducteur (2) dont la surface intérieure n'est pas couverte avec le revêtement anticorrosion (1), le liquide (3) dans le second tube conducteur (2), et l'électrode (4) placée à l'intérieur du second tube conducteur (2).

4. Système d'alimentation d'eau chaude et de chauffage (200), comprenant :

   - une cible de refroidissement (12) chauffée ou refroidie par un liquide (3) dans un tube ;
   - une pompe de circulation (13) qui fait circuler le liquide (3) à travers le tube ;
   - un tube conducteur (10) pour la circulation d'un liquide, dont une surface intérieure est couverte avec un revêtement anticorrosion (1), le tube conducteur (10) étant connecté à deux extrémités (10a, 10b) du tube ayant la cible de refroidissement (12) et la pompe de circulation (13) via des couplages isolants (14) ; et
   - un détecteur de dégradation de résistance à la corrosion (100) selon l'une quelconque des revendications 1 à 3.

5. Système d'alimentation d'eau chaude et de chauffage (200) comprenant :

   - un détecteur de dégradation de résistance à la corrosion (100) selon l'une quelconque des revendications 1 à 3 ;
   - un premier tube (10) qui forme le tube conducteur (2) et dont une surface intérieure est couverte avec un revêtement anticorrosion (1) ;
   - une cible de refroidissement (12) chauffée ou refroidie par un liquide (3) qui s'écoule à travers le premier tube ;
   - une pompe de circulation (13) qui fait circuler le liquide (3) ;
   - un premier tube de by-pass (16) qui forme le tube conducteur (2) ; et
   - un second tube de by-pass (16) qui forme le tube conducteur (2),

dans lequel le premier tube de by-pass a une extrémité connectée au premier tube (10) via un couplage isolant (14) et une autre extrémité connectée au détecteur de dégradation de résistance à la corrosion (100), dans lequel le second tube de by-pass (16) a une extrémité connectée au détecteur de dégradation de résistance à la corrosion (100), et une autre extrémité connectée au premier tube (10) via un couplage isolant (14), et dans lequel l'électrode (4) du détecteur de dégradation de résistance à la corrosion (10) est placée en contact avec le liquide (3) à l'intérieur d'un tube parmi le premier tube de by-pass (16) et le second tube de by-pass (16).

FIG. 1

FIG. 2

- - - - → PATH A
- · - · → PATH B

FIG. 3

FIG. 4

FIG. 5

EP 2 894 466 B1

FIG. 6

FIG. 7

F I G. 8

F I G. 9

FIG. 10

EP 2 894 466 B1

FIG. 11

25

**EP 2 894 466 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2532038 B
- JP 2005315864 A
- US 3210655 A